# EUROPÄISCHE PATENTSCHRIFT

(11) **EP 1 980 157 B1**
(45) Veröffentlichungstag und Bekanntmachung des Hinweises auf die Patenterteilung: **18.11.2009**
(21) Anmeldenummer: 08005333.3
(22) Anmeldetag: 20.03.2008
(51) Int. Cl.: A23L 1/00

(54) **Nahrungsmittelprodukt mit einer Tortilla**
Food product made with a tortilla
Produit alimentaire fait avec une tortilla

(30) Priorität: 22.03.2007 DE 202007004421 U
(43) Veröffentlichungstag der Anmeldung: 15.10.2008
(73) Patentinhaber: EMPY SYSTEM FOOD GmbH, 49716 Meppen (DE)
(72) Erfinder: Többen, Dietmar, 49716 Meppen (DE)
(74) Vertreter: Busse & Busse Patentanwälte

(56) Entgegenhaltungen:
- FR-A- 2 383 608
- US-A- 4 447 457
- US-A- 4 929 458
- US-A- 4 938 981

## Beschreibung

Die Erfindung betrifft ein Nahrungsmittelprodukt mit einer Tortilla, in die eine Füllung eingewickelt ist, nach dem Oberbegriff des Anspruchs 1 sowie eine derartige Tortilla.

Derartige Nahrungsmittelprodukte sind bekannt. Dabei weist die Tortilla eine im wesentlichen zylindrische Grundform auf. Eine im wesentlichen zylindrische Grundform meint die Form einer herkömmlichen Tortilla, die fladenförmig, flach und im Umfang gerundet ausgebildet ist. Die Tortilla-Grundform kann dabei auch tonnenförmig sein oder einen eher elliptische Querschnittsform aufweisen. Zudem kann der Rand ungleichmäßig gewellt sein. Die Füllung wird auf die flach ausgebreitete Tortilla aufgetragen. Anschließend wird die Füllung an einem Herauslaufen aus dem Nahrungsmittelprodukt dadurch gehindert, daß Randbereiche der Tortilla über der Füllung zusammengeklappt werden, die Füllung also eingewickelt wird.

US 4 447 457 beschreibt eine Tortilla mit zylindrischer Form, welche, um den Verzehr der Tortilla zu vereinfachen, um einen Stab gewickelt ist. Im Inneren der Tortilla ist eine Füllung eingewickelt, wobei die Tortilla am oberen Ende gefaltet wird um die Füllung komplett einzuschließen.

US 4 929 458 beschreibt eine Tortilla, welche, ausgehend von einer zylindrischen Grundform, kegelförmig geformt wird, um somit das Einbringen einer Füllung zu ermöglichen.

Nachteilig an derartigen Nahrungsmittelprodukten ist jedoch, daß nach dem Faltvorgang Ecken der Tortilla aus dem an sich im wesentlichen rechteckigen Nahrungsmittelprodukt herausragen. Diese Ecken sind optisch unerwünscht, da sie fertigungsbedingt ungleichmäßig weit aus dem Nahrungsmittelprodukt herausragen und dadurch eine Standardisierung des äußeren Erscheinungsbildes des Endproduktes deutlich erschweren. Zudem können diese Ecken im gefrorenen Zustand des Nahrungsmittelproduktes während der Weiterverarbeitung abbrechen. Eine Standardisierung des optischen Erscheinungsbildes des Nahrungsmittelproduktes ist jedoch erwünscht. Letztlich weist das Nahrungsmittelprodukt im Querschnitt in bestimmten Bereichen auch einen unerwünscht hohen Anteil Tortilla relativ zur Füllung auf.

Der Erfindung liegt daher die Aufgabe zugrunde, ein Nahrungsmittelprodukt der eingangs genannten Art bereitzustellen, bei dem die vorgenannten Nachteile vermindert sind.

Die Erfindung löst diese Aufgabe durch ein Nahrungsmittelprodukt mit den Ansprüchen des Anspruchs 1 sowie durch eine Tortilla mit den Merkmalen des Anspruchs 21. Weitere vorteilhafte Ausgestaltungen der Erfindung sind in den Unteransprüchen 2 bis 20 enthalten.

Dadurch, daß die Tortilla zumindest eine sich über die gesamte Zylinderhöhe erstreckende Materialaussparung im Randbereich der Tortilla aufweist, wird erreicht, daß die Tortilla leichter so zu falten ist, daß keine Ecken der Tortilla unerwünscht aus dem Nahrungsmittelprodukt herausragen. Hierdurch ist gleichzeitig eine bessere Standardisierung des optischen Erscheinungsbildes des Nahrungsmittelproduktes möglich. Zudem ist die Materialaussparung genau in dem Bereich des Nahrungsmittelproduktes angesiedelt, der ohne die Materialaussparung einen unerwünscht hohen Anteil Tortilla im Querschnitt aufweisen würde.

Das Verhältnis der Zylinderhöhe zum Zylinderdurchmesser der Tortilla-Grundform ist bevorzugt kleiner als 1 zu 25. Zudem kann die Tortilla sowohl auf Weizen- als auch auf Maisbasis oder einer Mischform verschiedener Pflanzensamen hergestellt sein. In einer besonders bevorzugten Ausgestaltung der Erfindung weist die Tortilla genau zwei Materialaussparungen auf. Die Materialaussparungen sind dabei bevorzugt an sich gegenüberliegenden Enden des gefalteten Nahrungsmittelproduktes angeordnet. Hierdurch ergeben sich die zuvor genannten Vorteile für beide Enden des Nahrungsmittelproduktes.

Mit Vorteil ist jede Materialaussparung überwiegend in einem separaten Zylinderquadranten der Tortilla-Grundform angeordnet, wobei die Zylinderquadranten durch eine erste und eine zweite sich in der Mitte der Tortilla-Grundform in einem rechten Winkel kreuzende Ebenen gebildet werden. Besonders bevorzugt sind zumindest zwei Materialaussparungen spiegelsymmetrisch zueinander ausgebildet und angeordnet, wobei die erste Ebene Spiegelebene ist. Durch diese Ausgestaltungen wird jeweils eine symmetrische Verteilung der Materialaussparungen erreicht, die eine symmetrische Verteilung der Tortilla im Nahrungsmittelprodukt und dadurch ein einheitlicheres Erscheinungsbild des Nahrungsmittelproduktes sowie eine gleichmäßigere Verteilung der Tortilla relativ zur Füllung im Querschnitt des Nahrungsmittelproduktes gewährleistet.

In einer bevorzugten Ausgestaltung der Erfindung weist jede Materialaussparung innerhalb des Zylinderquadranten, der sie überwiegend beinhaltet, im Querschnitt die Größe eines Achtels bis eines Drittels dieses Zylinderquadranten auf. Die Materialaussparung ist hierdurch groß genug zur Erzielung der zuvor genannten Wirkung. Andererseits ist sichergestellt, daß in den Fällen, in denen die Materialaussparung aus einer herkömmlichen runden Tortilla-Grundform ausgeschnitten wird, kein unnötig hoher Verlust an Tortilla entsteht. Die Abdeckung der Füllung ist dennoch sichergestellt.

Mit Vorteil weist zumindest eine erfindungsgemäße Materialaussparung eine im Querschnitt im wesentlichen dreieckige Grundform mit einer ersten und einer zweiten Dreiecksseite sowie ein sich an die dritte Dreiecksseite anschließendes Kreissegment auf. Die Materialaussparung hat also die Form eines Kreissektors, wobei die Materialaussparung jedoch nicht bis zum Mittelpunkt der zylindrischen Tortilla-Grundform reicht und die Seiten des Dreiecks bevorzugt ungleich lang sind. Diese Form hat sich als besonders geeignet zur Erzielung der mit der Materialaussparung generell erwünschten, zuvor beschriebenen Wirkungen gezeigt.

Die Tortilla weist in einer bevorzugten Ausgestaltung der Erfindung eine Abdecklasche auf, deren Form bereichsweise von der Form zumindest einer Materialaussparung bestimmt ist. Die Form der Abdecklasche wird also durch die Form der Materialaussparung mitbestimmt. Dadurch werden Bereiche der Tortilla-Grundform weggelassen, die beim Abdecken der hochgeklappten Seitenteile und des hochgeklappten unteren Teils der Tortilla stören würden. Die Abdecklasche weist dabei bevorzugt eine im Querschnitt im wesentlichen trapezförmige Form auf, wobei das Trapez gleichschenklig ausgebildet ist. Durch diese Ausgestaltung wird verhindert, daß die Schenkel des Trapez im gefrorenen Zustand des Nahrungsmittelprodukts während der Verarbeitung abbrechen können. Die Trapezform ist dabei bevorzugt an der kürzeren der parallelen Seiten im Querschnitt um die Form eines Kreissegments ergänzt. Dieses Kreissegment stört den Aufbau des Nahrungsmittelproduktes nicht und bewirkt, daß Tortilla nicht unnötig verbraucht wird, falls die Tortilla aus einer zylindrischen Grundform ausgeschnitten wird.

In einer besonders bevorzugten Ausgestaltung der Erfindung enthält die Füllung Brot. Bevorzugt enthält die Füllung dabei zwei Brotstreifen, zwischen denen zumindest ein Teil der weiteren Füllung angeordnet ist. Die Brotstreifen haben dabei mit Vorteil eine im wesentlichen quaderförmige Form und werden insbesondere von Dritteln herkömmlicher Toastbrotscheiben gebildet. Durch das Brot und die Brotstreifen wird ein Teil der Flüssigkeit der Füllung aufgesaugt und gespeichert. Hierdurch wird verhindert, daß das Nahrungsmittelprodukt durch die Flüssigkeit der Füllung außenseitig bereichsweise feucht wird. Eine derartige Durchfeuchtung würde das optisch einheitliche Erscheinungsbild des Nahrungsmittelproduktes und damit dessen Standardisierung stören. Zudem verhindert das Brot oder die Brotstreifen ein Auslaufen von Flüssigkeit während des Verzehrs des Nahrungsmittelproduktes.

In einer besonders bevorzugten Ausgestaltung der Erfindung ist auf einer Außenseite des Nahrungsmittelproduktes eine Prägung aus einer Farbzusammensetzung aufgebracht, die mit Vorteil Zuckercouleur, Paprikapulver und Wasser enthält. Durch die Prägung wird eine Standardisierung des äußeren Erscheinungsbildes des Nahrungsmittelproduktes erreicht und von Unregelmäßigkeiten auf der Außenseite des Nahrungsmittelproduktes abgelenkt. Die Farbzusammensetzung mit Zuckercouleur, Paprikapulver und Wasser hat sich dabei überraschenderweise als gut auf dem Nahrungsmittelprodukt haftend und nach einem Einfrieren des Nahrungsmittelproduktes auf diesem auch bei Berührung nicht mehr verschmierbar erwiesen. Dadurch ist sichergestellt, daß die Prägung stets gleichbleibend ist.

Mit Vorteil bildet die erste Dreiecksseite einen Winkel zwischen 80° und 100° mit der zweiten Ebene, wobei sich jedoch ein spitzer Winkel und insbesondere ein Winkel zwischen 80° und 89° als besonders geeignet erwiesen hat. Durch diese Ausgestaltung wird verhindert, daß eine mit der Materialaussparung gemeinsame Kante des Nahrungsmittelproduktes in dessen gefrorenem Zustand während der Verarbeitung abbrechen kann.

In einer vorteilhaften Ausgestaltung der Erfindung verbleibt auf der zweiten Dreiecksseite ein Vorsprung an der Tortilla. Bevorzugt bildet der Vorsprung dabei im Querschnitt einen spitzen Winkel mit der ersten Dreiecksseite. Durch den Vorsprung wird erreicht, daß die zuerst über die Füllung gefalteten Seiten nach einem Herüberfalten eines unteren Bereichs der Tortilla sowie eines abschließenden weiteren Herüberfaltens einer Abdecklasche über die hochgefalteten Seiten und den hochgefalteten unteren Bereich einen besseren Halt durch die Abdecklasche erfahren. Der spitze Winkel bewirkt zudem ein optisch einheitliches Faltbild, wodurch eine Standardisierung des Erscheinungsbildes des Nahrungsmittelproduktes verbessert wird.

Weitere Einzelheiten und Vorteile der Erfindung sind in den Unteransprüchen sowie dem nachfolgend beschriebenen schematisch dargestellten Ausführungsbeispiel enthalten. Es zeigen:
- Fig. 1: eine erfindungsgemäße Tortilla in der Draufsicht,
- Fig. 2: den Gegenstand aus Fig. 1 mit Brotstreifen und
- Fig. 3: ein erfindungsgemäßes Nahrungsmittelprodukt mit Prägung in der Draufsicht.

Nachfolgend werden gleichwirkende Teile des Erfindungsgegenstandes mit einer einheitlichen Bezugsziffer versehen.

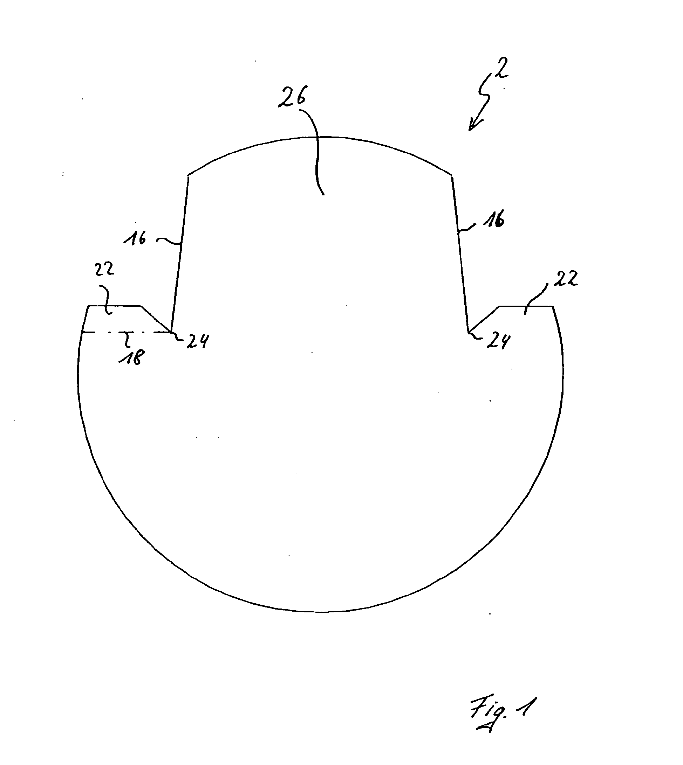

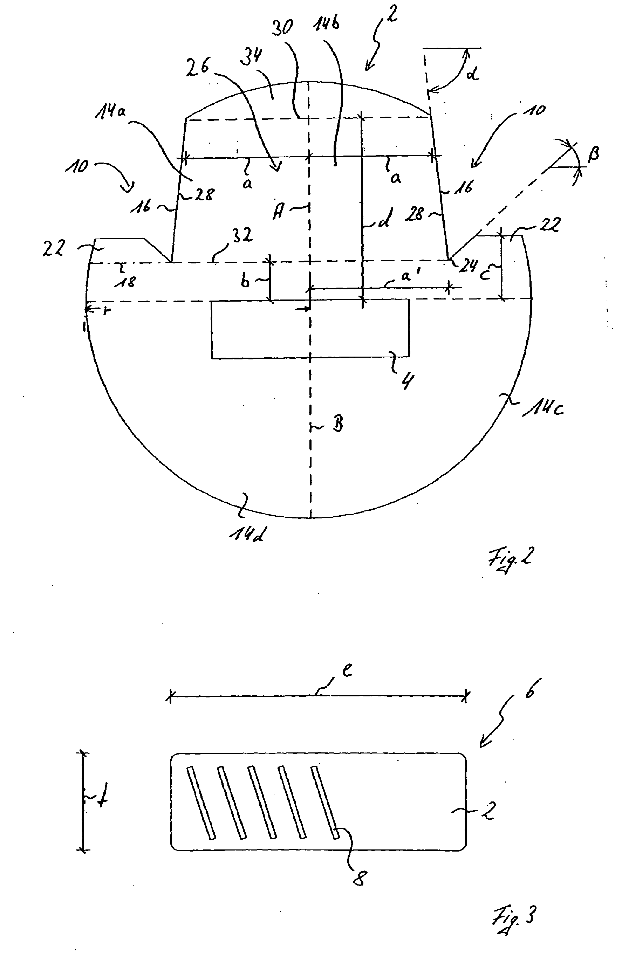

Fig. 1 und 2 zeigen eine erfindungsgemäße Tortilla 2 im noch nicht gefalteten Zustand in einer Draufsicht. In Fig. 2 ist auf die ausgebreitete Tortilla 2 bereits ein Brotstreifen 4 positioniert, auf den eine in den Figuren nicht dargestellte weitere Füllung aufgebracht wird. Fig. 3 zeigt ein erfindungsgemäßes Nahrungsmittelprodukt 6 mit einer gefalteten Tortilla 2, in die eine in Fig. 3 durch die Tortilla 2 verdeckte Füllung eingewickelt ist. Auf der Außenseite des Nahrungsmittelproduktes 6 ist eine Prägung 8 aus einer Farbzusammensetzung aufgebracht, die Zuckercouleur, Paprikapulver und Wasser enthält.

Die erfindungsgemäße Form der Tortilla 2 ist aus Fig. 1 und Fig. 2 ersichtlich. Die Tortilla 2 weist eine im wesentlichen zylindrische Grundform auf. Im Ausführungsbeispiel hat die Tortilla genau zwei sich über die gesamte Zylinderhöhe erstreckende Materialaussparungen 10 im Randbereich der Tortilla 2. Die Materialaussparungen 10 sind dabei jeweils in einem separaten der Zylinderquadranten 14a, 14b, 14c, 14d der Tortilla-Grundform angeordnet. Die Zylinderquadranten 14a, 14b, 14c, 14d werden dabei durch eine erste Ebene A und eine zweite Ebene B gebildet, die sich in der Mitte der Tortilla-Grundform in einem rechten Winkel kreuzen. Die Materialaussparungen 10 sind spiegelsymmetrisch zueinander, wobei die erste Ebene A Spiegelebene ist.

Die Materialaussparungen 10 weisen eine im Querschnitt im wesentlichen dreieckige Grundform mit einer ersten Dreiecksseite 16 und einer zweiten Dreiecksseite 18 sowie einem Kreissegment auf. Im Ausführungsbeispiel verbleibt auf der zweiten Dreieckseite 18 ein Vorsprung 22 an der Tortilla 2, der sich über die gesamte Länge der zweiten Dreiecksseite 18 erstreckt. Die Position der Dreiecksseite 18 ist im Ausführungsbeispiel durch die Hilfslinie 18 dargestellt. Die erste Dreiecksseite 16 bildet mit der zweiten Ebene B einen Winkel α, der bevorzugt 80° bis 100° beträgt. Der an der Tortilla 2 verbleibende Vorsprung 22 bildet mit der zweiten Ebene B einen spitzen Winkel β, der bevorzugt 42° beträgt.

Das Verhältnis des Radius r der Tortilla-Grundform zum Abstand a, a' zwischen der ersten Dreiecksseite 16 und der ersten Ebene A beträgt bevorzugt 1,5 bis 2 und im Ausführungsbeispiel zwischen 1,8 und 1,6. Das Verhältnis des Radius r der Tortilla-Grundform zum Abstand b zwischen dem von der ersten Dreiecksseite 16 und der zweiten Dreiecksseite 18 gebildeten Eckpunkt 24 und der zweiten Ebene B beträgt bevorzugt 5 bis 6 und im Ausführungsbeispiel 5,7. Durch beide Verhältnisse ist jeweils sichergestellt, daß die Materialausnehmungen 10 groß genug zur Erzielung der zuvor beschriebenen vorteilhaften Wirkungen sind und andererseits eine ausreichende Abdeckung der Füllung sichergestellt ist sowie im Falle eines Ausschneidens der Materialausnehmungen 10 aus einer herkömmlichen, runden Tortilla nicht unnötig Tortilla unverwertet bleibt.

Die Tortilla 2 weist eine Abdecklasche 26 auf, die eine im Querschnitt im wesentlichen trapezförmige Form aufweist, wobei das Trapez zwei gleiche Schenkel 28 hat. Die Form der Abdecklasche 26 ist dabei bereichsweise von der Form der Materialaussparungen 10 bestimmt. An der kürzeren der parallelen Seiten 30, 32 ist die Trapezform um die Form eines Kreissegments 34 ergänzt.

Das in Fig. 1 bis Fig. 3 dargestellte Ausführungsbeispiel eines erfindungsgemäßen Nahrungsmittelprodukts 6 und einer erfindungsgemäßen Tortilla 2 sind eine maßstabsgetreue, wenn auch verkleinerte, schematische Wiedergabe einer besonders bevorzugten Ausführungsform. Die in Fig. 2 und Fig. 3 zum Teil durch Hilfslinien angegebenen Maße werden nachfolgend wiedergegeben:

| | |
|---|---|
| r: | 125 mm |
| a: | 68 mm |
| a': | 77 mm |
| b: | 22 mm |
| c: | 36 mm |
| d: | 104 mm |
| e: | 165 mm |
| f: | 55 mm |
| α: | 84° |
| β: | 42° |

## Patentansprüche

1. Nahrungsmittelprodukt (6) mit einer Tortilla (2), in die eine Füllung eingewickelt ist, wobei die Tortilla eine im wesentlichen zylindrische Grundform aufweist, **dadurch gekennzeichnet, daß** die Tortilla (2) zumindest eine sich über die gesamte Zylinderhöhe erstreckende Materialaussparung (10) im Randbereich der Tortilla (2) aufweist.

2. Nahrungsmittelprodukt (6) nach Anspruch 1, **dadurch gekennzeichnet, daß** die Tortilla (2) genau zwei Materialaussparungen (10) aufweist.

3. Nahrungsmittelprodukt (6) nach einem der vorhergehenden Ansprüche, **dadurch gekennzeichnet, daß** jede Materialaussparung (10) überwiegend in einem separaten Zylinderquadranten (14a, 14b, 14c, 14d) der Tortilla-Grundform angeordnet ist, wobei die Zylinderquadranten (14a, 14b, 14c, 14d) durch eine erste Ebene (A) und eine zweite Ebene (B) gebildet werden, die sich in der Mitte der Tortilla-Grundform in einem rechten Winkel kreuzen.

4. Nahrungsmittelprodukt (6) nach Anspruch 3, **dadurch gekennzeichnet, daß** zumindest zwei Materialaussparungen (10) spiegelsymetrisch zueinander sind, wobei die erste Ebene (A) Spiegelebene ist.

5. Nahrungsmittelprodukt (6) nach Anspruch 3 oder 4, **dadurch gekennzeichnet, daß** die Materialaussparung (10) in dem Zylinderquadranten (14a, 14b) der sie überwiegend beinhaltet, im Querschnitt die Größe eines Achtels bis eines Drittels dieses Zylinderquadranten (14a, 14b) aufweist.

6. Nahrungsmittelprodukt (6) nach einem der vorhergehenden Ansprüche, **dadurch gekennzeichnet, daß** zumindest eine Materialaussparung (10) eine im Querschnitt im wesentlichen dreieckige Grundform mit einer ersten Dreiecksseite (16) und einer zweiten Dreiecksseite (18) sowie einem Kreissegment (20) aufweist.

7. Nahrungsmittelprodukt (6) nach Anspruch 6, **dadurch gekennzeichnet, daß** die Seiten (16, 18) des Dreiecks ungleich lang sind.

8. Nahrungsmittelprodukt (6) nach Anspruch 6 oder 7, **dadurch gekennzeichnet, daß** die erste Dreiecksseite (16) einen Winkel α zwischen 80° und 100° mit der zweiten Ebene (B) bildet.

9. Nahrungsmittelprodukt (6) nach Anspruch 8, **dadurch gekennzeichnet, daß** der Winkel α spitz ist, insbesondere 80° bis 89° beträgt.

10. Nahrungsmittelprodukt (6) nach einem der Ansprüche 6 bis 9, **dadurch gekennzeichnet, daß** auf der zweiten Dreiecksseite (18) ein Vorsprung (22) an der Tortilla (2) verbleibt.

11. Nahrungsmittelprodukt (6) nach Anspruch 10, **dadurch gekennzeichnet, daß** der Vorsprung (22) im Querschnitt einen spitzen Winkel β mit der zweiten Ebene (B) bildet.

12. Nahrungsmittelprodukt (6) nach einem der Ansprüche 6 bis 11, **dadurch gekennzeichnet, daß** das Verhältnis des Radius (r) der Tortilla-Grundform zum Abstand (a, a') zwischen der ersten Dreiecksseite (16) und der ersten Ebene (A) 1,5 bis 2 beträgt.

13. Nahrungsmittelprodukt (6) nach einem der Ansprüche 6 bis 12, **dadurch gekennzeichnet, daß** das Verhältnis des Radius (r) der Tortilla-Grundform zum Abstand (b) zwischen dem von der ersten Dreiecksseite (16) und der zweiten Dreiecksseite (18) gebildeten Eckpunkt (24) und der zweiten Ebene (B) 5 bis 6 beträgt.

14. Nahrungsmittelprodukt (6) nach einem der vorhergehenden Ansprüche, **dadurch gekennzeichnet, daß** die Tortilla (2) eine Abdecklasche (26) aufweist, deren Form bereichsweise von der Form zumindest einer Materialausparung (10) bestimmt ist.

15. Nahrungsmittelprodukt (6) nach Anspruch 14, **dadurch gekennzeichnet, daß** die Abdecklasche (26) eine im Querschnitt im wesentlichen trapezförmige Form aufweist, wobei das Trapez gleichschenklig ausgebildet ist.

16. Nahrungsmittelprodukt (6) nach Anspruch 15, **dadurch gekennzeichnet, daß** die Trapezform an der kürzeren der parallelen Seiten (30) im Querschnitt um die Form eines Kreissegments (34) ergänzt ist.

17. Nahrungsmittelprodukt (6) nach einem der vorhergehenden Ansprüche, **dadurch gekennzeichnet, daß** die Füllung Brot (4) enthält.

18. Nahrungsmittelprodukt (6) nach Anspruch 17, **dadurch gekennzeichnet, daß** die Füllung zwei Brotstreifen (4) enthält, zwischen denen zumindest ein Teil der weiteren Füllung angeordnet ist.

19. Nahrungsmittelprodukt (6) nach einem der vorhergehenden Ansprüche, **dadurch gekennzeichnet, daß** das auf einer Außenseite des Nahrungsmittelprodukts (6) eine Prägung (8) aus einer Farbzusammensetzung aufgebracht ist.

20. Nahrungsmittelprodukt (6) nach Anspruch 19, **dadurch gekennzeichnet, daß** die Farbzusammensetzung Zuckercouleur, Paprikapulver und Wasser enthält.

21. Tortilla (2), **gekennzeichnet durch** eine Form nach einem der Ansprüche 1 bis 16.

## Claims

1. A food product (6) with a tortilla (2), into which a filling is wrapped, wherein the tortilla has an essentially cylindrical basic shape, **characterised in that** the tortilla (2) comprises at least one material recess (10) in the edge region of the tortilla (2), said material recess extending over the whole cylinder height.

2. The food product (6) according to claim 1, **characterised in that** the tortilla (2) comprises precisely two material recesses (10).

3. The food product (6) according to any one of the preceding claims, **characterised in that** each material recess (10) is arranged predominantly in a separate cylinder quadrant (14a, 14b, 14c, 14d) of the tortilla basic shape, wherein the cylinder quadrants (14a, 14b, 14c, 14d) are formed by a first plane (A) and a second plane (B), which intersect at right angles in the middle of the tortilla basic shape.

4. The food product (6) according to claim 3, **characterised in that** at least two material recesses (10) are mirror-symmetric with respect to one another, the first plane (A) being a mirror plane.

5. The food product (6) according to claim 3 or 4, **characterised in that** the material recess (10) in the cylinder quadrant (14a, 14b) which predominantly contains it has in cross-section the size of an eighth to a third of this cylinder quadrant (14a, 14b).

6. The food product (6) according to any one the preceding claims, **characterised in that** at least one material recess (10) has a basic shape essentially triangular in cross-section, with a first triangle side (16) and a second triangle side (18) and a segment of circle (20).

7. The food product (6) according to claim 6, **characterised in that** the sides (16, 18) of the triangle are of unequal length.

8. The food product (6) according to claim 6 or 7, **characterised in that** the first triangle side (16) forms an angle α between 80° and 100° with the second plane (B).

9. The food product (6) according to claim 8, **characterised in that** angle α is acute, amounting in particular to 80° to 89°.

10. The food product (6) according to any one of claims 6 to 9, **characterised in that** a projection (22) on the tortilla (2) remains on the second triangle side (18).

11. The food product (6) according to claim 10, **characterised in that** the projection (22) in cross-section forms an acute angle β with the second plane (B).

12. The food product (6) according to any one of claims 6 to 11, **characterised in that** the ratio of the radius (r) of the tortilla basic shape to the distance (a, a') between the first triangle side (16) and the first plane (A) amounts to 1.5 to 2.

13. The food product (6) according to any one of claims 6 to 12, **characterised in that** the ratio of the radius (r) of the tortilla basic shape to the distance (b) between the corner point (24), formed by the first triangle side (16) and the second triangle side (18), and the second plane (B) amounts to 5 to 6.

14. The food product (6) according to any one of the preceding claims, **characterised in that** the tortilla (2) comprises a cover flap (26), the shape of which is determined in sections by the shape of at least one material recess (10).

15. The food product (6) according to claim 14, **characterised in that** the cover flap (26) has an essentially trapezoidal shape in cross-section, the trapezoid being formed isosceles.

16. The food product (6) according to claim 15, **characterised in that** the trapezoidal shape is supplemented in cross-section by the shape of a segment of circle (34) on the shortest of the parallel sides (30).

17. The food product (6) according to any one of the preceding claims, **characterised in that** the filling contains bread (4).

18. The food product (6) according to claim 17, **characterised in that** the filling contains two bread strips (4), between which at least a part of the further filling is arranged.

19. The food product (6) according to any one of the preceding claims, **characterised in that** an imprint (8) of a dye composition is applied on the outer side of the food product (6).

20. The food product (6) according to claim 19, **characterised in that** the dye composition contains caramel, paprika powder and water.

21. A tortilla (2), **characterised by** a shape according to any one of claims 1 to 16.

## Revendications

1. Produit alimentaire (6) fait avec une tortilla (2), dans laquelle est roulée une farce, la tortilla présentant une forme de base essentiellement cylindrique, **caractérisé en ce que** la tortilla (2) présente au moins un évidement de matière (10) s'étendant sur toute la hauteur cylindrique, dans la zone de bord de la tortilla (2).

2. Produit alimentaire (6) selon la revendication 1, **caractérisé en ce que** la tortilla (2) présente exactement deux évidements de matière (10).

3. Produit alimentaire (6) selon l'une quelconque des revendications précédentes, **caractérisé en ce que** chaque évidement de matière (10) est agencé principalement dans un quart de cylindre séparé (14a, 14b, 14c, 14d) de la forme de base de la tortilla, les quarts de cylindre (14a, 14b, 14c, 14d) étant formés par un premier plan (A) et un deuxième plan (B), qui se croisent au milieu de la forme de base de la tortilla en formant un angle droit.

4. Produit alimentaire (6) selon la revendication 3, **caractérisé en ce qu'**au moins deux évidements de matière (10) sont agencés de manière symétrique l'un par rapport à l'autre, le premier plan (A) étant un plan de symétrie.

5. Produit alimentaire (6) selon la revendication 3 ou 4, **caractérisé en ce que** l'évidement de matière (10) dans le quart de cylindre (14a, 14b) qui le contient principalement, présente une section transversale de la taille d'un huitième à un tiers de ce quart de cylindre (14a, 14b).

6. Produit alimentaire (6) selon l'une quelconque des revendications précédentes, **caractérisé en ce qu'**au moins un évidement de matière (10) présente une forme de base à section transversale essentiellement triangulaire avec un premier côté du triangle (16) et un deuxième côté du triangle (18) ainsi qu'avec un segment de cercle (20).

7. Produit alimentaire (6) selon la revendication 6, **caractérisé en ce que** les côtés (16, 18) du triangle sont de longueur inégale.

8. Produit alimentaire (6) selon la revendication 6 ou 7, **caractérisé en ce que** le premier côté du triangle (16) forme un angle α compris entre 80° et 100° avec le deuxième plan (B).

9. Produit alimentaire (6) selon la revendication 8, **caractérisé en ce que** l'angle α est aigu, en particulier de 80° à 89°.

10. Produit alimentaire (6) selon l'une quelconque des revendications 6 à 9, **caractérisé en ce qu'**il reste une saillie (22) sur la tortilla (2) sur le deuxième côté du triangle (18).

11. Produit alimentaire (6) selon la revendication 10, **caractérisé en ce que** la saillie (22) forme dans la section transversale un angle aigu β avec le deuxième plan (B).

12. Produit alimentaire (6) selon l'une quelconque des revendications 6 à 11, **caractérisé en ce que** le rapport entre le rayon (r) de la forme de base de la tortilla et la distance (a, a') entre le premier côté du triangle (16) et le premier plan (A) est de 1,5 à 2.

13. Produit alimentaire (6) selon l'une quelconque des revendications 6 à 12, **caractérisé en ce que** le rapport entre le rayon (r) de la forme de base de la tortilla et la distance (b) entre le coin (24), formé par le premier côté du triangle (16) et le deuxième côté du triangle (18), et le deuxième plan (B) est de 5 à 6.

14. Produit alimentaire (6) selon l'une quelconque des revendications précédentes, **caractérisé en ce que** la tortilla (2) présente un rabat (26), dont la forme est déterminée par secteurs par la forme d'au moins un évidement de matière (10).

15. Produit alimentaire (6) selon la revendication 14, **caractérisé en ce que** le rabat (26) présente une forme à section transversale essentiellement trapézoïdale, le trapèze étant isocèle.

16. Produit alimentaire (6) selon la revendication 15, **caractérisé en ce que** la forme trapézoïdale est complétée dans la section transversale du côté le plus court des côtés parallèles (30) par la forme d'un segment de cercle (34).

17. Produit alimentaire (6) selon l'une quelconque des revendications précédentes, **caractérisé en ce que** la farce contient du pain (4).

18. Produit alimentaire (6) selon la revendication 17, **caractérisé en ce que** la farce contient deux tranches de pain (4), entre lesquelles est disposée au moins une partie de l'autre farce.

19. Produit alimentaire (6) selon l'une quelconque des revendications précédentes, **caractérisé en ce qu'**un marquage (8) constitué d'une composition de colorants est appliqué sur un côté extérieur du produit alimentaire (6).

20. Produit alimentaire (6) selon la revendication 19, **caractérisé en ce que** la composition de colorants contient du caramel, de la poudre de paprika et de l'eau.

21. Tortilla (2), **caractérisée par** une forme selon l'une quelconque des revendications 1 à 16.
